(19) **Europäisches Patentamt**
**European Patent Office**
**Office européen des brevets**

(11) **EP 3 885 161 B1**

(12) **EUROPEAN PATENT SPECIFICATION**

(45) Date of publication and mention
of the grant of the patent:
**15.05.2024 Bulletin 2024/20**

(21) Application number: **19897023.8**

(22) Date of filing: **13.12.2019**

(51) International Patent Classification (IPC):
**B60C 3/04** *(2006.01)*    **B60C 11/03** *(2006.01)*
**B60C 11/04** *(2006.01)*   **B60C 9/20** *(2006.01)*
**B60C 9/22** *(2006.01)*    **B60C 9/26** *(2006.01)*
**B60C 9/00** *(2006.01)*    **B60C 11/00** *(2006.01)*

(52) Cooperative Patent Classification (CPC):
**B60C 9/2204; B60C 3/04; B60C 9/2009;**
**B60C 11/04;** B60C 2009/266; B60C 2011/0033

(86) International application number:
**PCT/JP2019/049003**

(87) International publication number:
**WO 2020/122240 (18.06.2020 Gazette 2020/25)**

(54) **PNEUMATIC TIRE**

LUFTREIFEN

PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.12.2018 JP 2018233637**

(43) Date of publication of application:
**29.09.2021 Bulletin 2021/39**

(73) Proprietor: **BRIDGESTONE CORPORATION**
**Chuo-ku**
**Tokyo 104-8340 (JP)**

(72) Inventors:
• **NAKATA, Yoshiki**
**Tokyo 104-8340 (JP)**

• **KAWASHIMA, Keisuke**
**Tokyo 104-8340 (JP)**
• **SUZUKI, Kohei**
**Tokyo 104-8340 (JP)**

(74) Representative: **Marks & Clerk LLP**
**15 Fetter Lane**
**London EC4A 1BW (GB)**

(56) References cited:
WO-A1-2015/155992      WO-A1-2017/022308
JP-A- H05 162 506      JP-A- S56 112 303
JP-A- 2001 088 502      JP-A- 2002 178 720
JP-A- 2007 237 799      JP-A- 2009 190 546
JP-A- 2010 001 006      JP-A- 2014 213 651
JP-A- 2017 043 202      JP-U- S5 858 903
US-A1- 2001 050 126

**Description**

[Technical Field]

The present invention relates to a small-diameter pneumatic tire having improved load-carrying capacity.

[Background Art]

Conventionally, a pneumatic tire with a reduced diameter while increasing the load-carrying capacity (maximum load capacity) is known (See Patent Literature 1.). According to the pneumatic tire, the space of a small vehicle can be saved, and a wide riding space can be secured. Attention is also drawn to the disclosure of US2001/050126A1.

[Citation List]

[Patent Literature]

[PTL 1] Japanese Unexamined Patent Application Publication No. 2018-138435

[Summary of Invention]

However, in the case of the pneumatic tire having a small diameter as described above, the ground contact length is short and the ground contact area is small whereas the load to be supported, so that there is a problem that the ground contact pressure tends to be uneven. Such non-uniformity of the grounding pressure can cause uneven wear.
In recent years, a new small shuttle bus has been proposed with an emphasis on transportation of people and goods within the city. Such a small shuttle bus has a total length of about 5 meters and a total width of about 2 meters, and the total vehicle weight is assumed to exceed 3 tons. Space saving is also required for the pneumatic tire mounted on such a small shuttle bus.
Accordingly, an object of the present invention is to provide a pneumatic tire that can effectively suppress uneven wear while attaining high load-carrying capacity and space saving.
The present invention provides a pneumatic tire as claimed in claim 1.

[Brief Description of Drawings]

FIG. 1 is an overall schematic side view of a vehicle 1 to which a pneumatic tire 10 is mounted.
FIG. 2 is a cross-sectional view of the pneumatic tire 10 and a rim wheel 100.
FIG. 3 is a cross-sectional view of the sole pneumatic tire 10.
FIG. 4 is a partially developed plan view of a tread 20.
FIG. 5 shows a typical tire size positioning based on a combination of a tire shape (tire outer diameter OD & tire width SW) and a rim wheel shape (rim diameter RD and rim width RW).
FIG. 6 is a cross-sectional view of a pneumatic tire 10 A according to modified example.
FIG. 7 is a cross-sectional view of a pneumatic tire 10 B according to another modified example.

[Description of Embodiments]

Embodiments will be described below with reference to the drawings. The same functions and configurations are denoted by the same or similar reference numerals, and description thereof will be omitted as appropriate.
(1) Schematic configuration of vehicle to which pneumatic tire is mounted

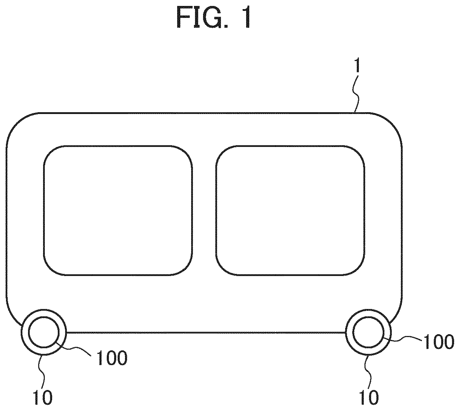

FIG. 1 is an overall schematic side view of the vehicle 1 to which the pneumatic tire 10 according to the present embodiment is mounted. As shown in FIG. 1, in this embodiment, the vehicle 1 is a four-wheel vehicle. The vehicle 1 is not limited to four wheels, but may have a six-wheel configuration or an eight-wheel configuration.
A predetermined number of pneumatic tire 10 are mounted on a vehicle 1 according to a wheel configuration. Specifically, in the vehicle 1, the pneumatic tire 10 assembled to a rim wheel 100 is mounted in a predetermined position.
The vehicle 1 belongs to a new small shuttle bus with an emphasis on transportation of people and goods in the city. In this embodiment, the new small shuttle bus is assumed to be a vehicle having a total length of 4 meters to 7 meters, a total width of about 2 meters, and a total vehicle weight of about 3 tons. However, the size and the gross vehicle weight are not necessarily limited to the range, and may be slightly out of the range.

The small shuttle bus is not necessarily limited to transportation of people, but may be used for transportation of goods, a mobile store, a mobile office, etc.

In addition, small shuttle buses have a relatively low travel speed range (maximum speed: 70 km/h or less, average speed: about 50 km/h) because they are focused on transporting people and goods within the city. Therefore, hydroplaning countermeasures need not be emphasized.

In the present embodiment, it is assumed that the vehicle 1 is an electric vehicle having an automatic driving function (assume Level 4 or higher), but the automatic driving function is not essential and the vehicle 1 may not be an electric vehicle.

If the vehicle 1 is an electric vehicle, an in-wheel motor (unillustrated) is preferably used as a power unit. The in-wheel motor may be provided with the whole unit in the inner space of the rim wheel 100 or a part of the unit in the inner space of the rim wheel 100.

If an in-wheel motor is used, the vehicle 1 preferably has an independent steering function in which each wheel can steer independently. This makes it possible to turn and move in the lateral direction on the spot and eliminates the need for a power transmission mechanism, thereby improving the space efficiency of the vehicle 1.

Thus, in the vehicle 1, high space efficiency is required. For this reason, the pneumatic tire 10 preferably has a small diameter as small as possible.

On the other hand, a high load-carrying capacity (maximum load capacity) is required because it is mounted on the vehicle 1 having a gross vehicle weight corresponding to a vehicle size and an application.

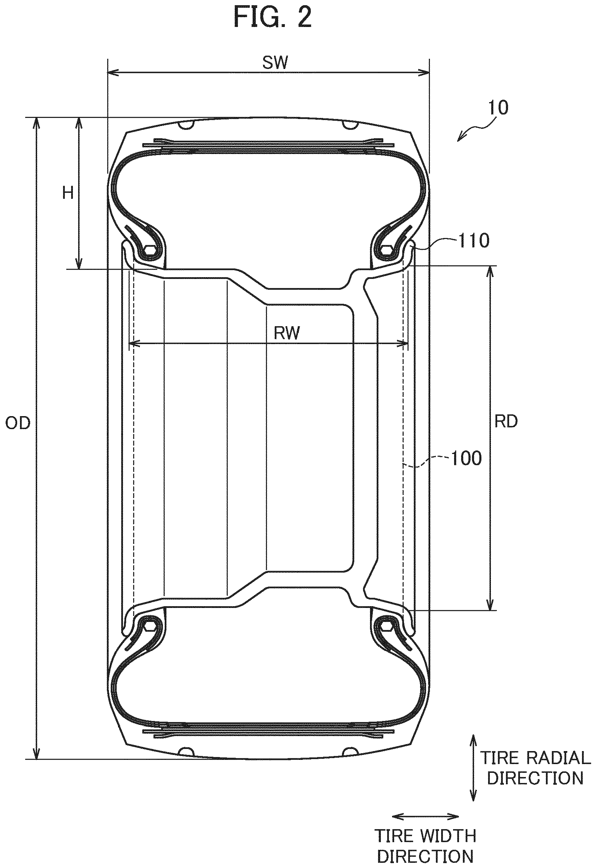

In order to satisfy such requirements, the pneumatic tire 10 has a load-carrying capacity corresponding to the total vehicle weight of the vehicle 1 while reducing the tire outer diameter OD (not shown in FIG. 1, see FIG. 2).

If the vehicle 1 has an in-wheel motor and an independent steering function, the pneumatic tire 10 is preferably low in aspect ratio from the viewpoint of improving responsiveness, and the rim diameter RD (not shown in FIG. 1, see FIG. 2) of the pneumatic tire 10 is preferably large in consideration of a housing space for an in-wheel motor or the like.

(2) Configuration of pneumatic tire

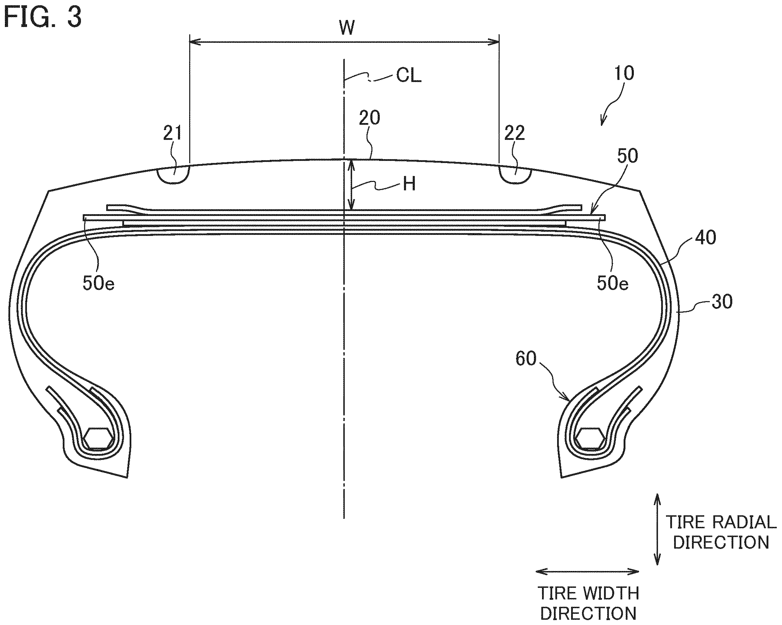

FIG. 2 is a cross-sectional view of the pneumatic tire 10 and the rim wheel 100. Specifically, FIG. 2 is a cross-sectional view along the tire width direction and the tire radial direction of a pneumatic tire 10 assembled to a rim wheel 100. In FIG. 2, the sectional hatching is not shown (the same as FIG. 3 and beyond).

The pneumatic tire 10 has a relatively small diameter while being wide. Specifically, the rim diameter RD of the rim wheel 100 is 12 inches or more and 17.5 inches or less.

As shown in FIG. 2, the rim diameter RD is the outer diameter of the rim body portion of the rim wheel 100 and does not include the portion of the rim flange 110.

The tire width SW of the pneumatic tire 10 is preferably 125 mm or more and 255 mm or less. As shown in FIG. 2, the tire width SW means a cross-sectional width of the pneumatic tire 10, and when the pneumatic tire 10 includes a rim guard (unillustrated), the rim guard portion is not included.

The aspect ratio of the pneumatic tire 10 is preferably 35% or more and 75% or less. The Aspect ratio is calculated using expression 1.

Aspect ratio (%) = tire section height H/tire width SW (section width) x 100          (Expression 1)

The tire outer diameter OD of the pneumatic tire 10 is 350 mm or more and 600 mm or less. The tire outer diameter OD is preferably 500 mm or less.

When the tire outer diameter OD is such a size and the rim width RW is defined by the rim width of the rim wheel 100 assembled to the pneumatic tire 10 is, the pneumatic tire 10 satisfies the relationship of (Expression 2) and (Expression 3).

$$0.78 \leq RW/SW \leq 0.99 \ ... \ (\text{Expression 2})$$

$$0.56 \leq RD/OD \leq 0.75 \ ... \ (\text{Expression 3})$$

The pneumatic tire 10 preferably satisfies $0.78 \leqq RW/SW \leqq 0.98$, and more preferably $0.78 \leqq RW/SW \leqq 0.95$.

The pneumatic tire 10 preferably satisfies $0.56 \leq RD/OD \leq 0.72$, and more preferably $0.56 \leq RD/OD \leq 0.71$.

The pneumatic tire 10 satisfying such a relationship can ensure an air volume necessary for supporting the gross vehicle weight of the vehicle 1 while having a small diameter. Specifically, an air volume of 20,000 cm$^3$ or more is required in consideration of load bearing performance. In addition, in order to save space, it is required to be 80,000 cm$^3$ or less.

If the above relationship is satisfied, the rim width RW is not particularly limited, but is preferably as wide as possible from the viewpoint of securing the air volume. For example, the rim width may be 3.8 to 7.8 J.

Also, from the viewpoint of securing the air volume, it is preferable that the ratio of the rim diameter RD to the tire outer diameter OD is small, that is, the aspect ratio is high. However, as described above, it is preferable that the aspect ratio is low from the viewpoint of responsiveness, and it is preferable that the rim diameter RD is large in consideration of the housing space such as the in-wheel motor, so that the aspect ratio and the rim diameter RD have a trade-off relationship between the air volume and the responsiveness as well as the housing space such as the in-wheel motor.

One example of a suitable size for the pneumatic tire 10 is 205/40 R 15. The suitable rim width is approximately 7.5 J. Other examples of suitable sizes include 215/45 R 12. In this case, the suitable rim width is approximately 7.0 J.

In addition, a set internal pressure (normal pressure) of the pneumatic tire 10 is 400 to 1,100 kPa, and assumed to be more realistically 500 ~ 900 kPa. The normal internal pressure is, for example, the air pressure corresponding to the maximum load capacity in the YearBook of JATMA (Japan Automobile Tire Manufacturers Association) in Japan, ETRTO in Europe, TRA in the United States, and other tire standards in each country.

In addition, the load to be borne by the pneumatic tire 10 is assumed to be 500 to 1,500 kgf (4.9kN to 14.7kN), and practically, about 900 kgf (8.8kN).

FIG. 3 is a sectional view of the sole pneumatic tire 10. Specifically, FIG. 3 is a cross-sectional view of pneumatic tire 10 taken along the tire width direction and the tire radial direction.

As shown in FIG. 3, the pneumatic tire 10 includes a tread 20, a tire side portion 30, a carcass 40, a belt layer 50 and a bead portion 60.

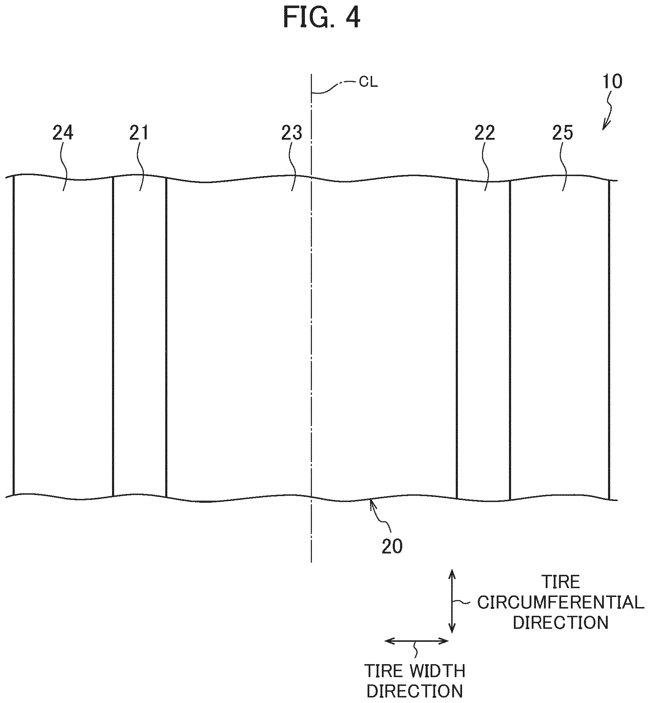

The tread 20 is a portion in contact with the road surface. On the tread 20, a pattern (See Fig. 4) corresponding to the use environment of the pneumatic tire 10 and the type of vehicle to be mounted is formed.

In this embodiment, two circumferential main grooves extending to the tire circumferential direction are formed on the tread 20. The tread 20 may have more circumferential grooves or width direction grooves extending to the tire width direction. The circumferential direction groove and the width direction groove may form a block in contact with the road surface. The shape of the block in a tread surface view is not particularly limited.

Specifically, a circumferential main groove 21 and a circumferential main groove 22 are formed on the tread 20. The circumferential main groove 21 and the circumferential main groove 22 are formed closer to the tire equatorial line CL than an outer end 50 e of the belt layer 50.

When W is defined by the distance between the inner end in the tire width direction of the circumferential main groove 21 and the outer end in the tire width direction of the circumferential main groove 22, and H is define by the thickness (rubber gauge) of the tread 20 at the position of the tire equatorial line CL, the relation of $1.5 \leq W/H \leq 6.0$ is preferably satisfied, and more preferably $2.0 \leq W/H \leq 4.0$ is satisfied.

The tire side portion 30 continues to the tread 20 and positioned inside in the tire radial direction of the tread 20. The tire side portion 30 is a region from the tire width direction outside end of the tread portion 20 to the upper end of the bead portion 60. The tire side portion 30 is sometimes referred to as a side wall or the like.

The carcass 40 forms the skeleton of the pneumatic tire 10. The carcass 40 has a radial structure in which a carcass cord (unillustrated) arranged radially along the tire radial direction is covered with a rubber material. However, it is not limited to a radial structure, and may be a bias structure in which a carcass cords are arranged so as to cross each other in the tire radial direction.

The belt layer 50 is provided inside the tire radial direction of the tread 20. In this embodiment, the belt layer 50 has a 3-belt configuration, but may have a 4-belt configuration. Specifically, the belt layer 50 includes a pair of crossing belts with crossing cords. The configuration of the belt layer 50 is generally similar to that of a typical tire belt layer for trucks and buses.

The bead portion 60 continues to tire side portion 30 and is positioned inside in tire radial direction of tire side portion 30. The bead portion 60 is an annular shape extending to the tire circumferential direction, and the carcass 40 is folded from the inside of the tire width direction to the outside of the tire width direction via the bead portion 60.

The bead portion 60 may be provided with a bead filler outside in the tire radial direction of a bead core, or may be provided with a chafer for preventing the carcass 40 or the like folded by the bead portion 60 from being rubbed and worn by the rim wheel 100.

4

(3) Position and shape of circumferential main groove

FIG. 4 is a partially developed plan view of the tread 20. As shown in FIG. 4, a plurality of blocks are formed on the tread 20 by the circumferential main groove 21 and the circumferential main groove 22.

Specifically, the tread 20 is formed with a center block 23, a shoulder block 24 and a shoulder block 25.

The center block 23 is formed in a region including the tire equatorial line CL. The circumferential main groove 21 and the circumferential main groove 22 are formed at an end portion in the tire width direction of the center block 23.

The shoulder block 24 is formed outside in the tire width direction of the circumferential main groove 21. The shoulder block 25 is formed outside in the tire width direction of the circumferential main groove 22.

In this embodiment, the circumferential main groove 21 and the circumferential main groove 22 are formed in a range of 25% or more and 95% or less, when the width from the tire equatorial line CL to the outer end 50 e in tire width direction of the belt layer 50 is 100%. The circumferential main grooves 21 and 22 are preferably formed in a range of 35% to 85%, more preferably 40% to 70%.

The specific shape of the circumferential main groove 21 and the circumferential main groove 22 is not required as long as they extend to the tire circumferential direction, such as a straight groove, a zigzag groove or a curved groove.

Further, since the traveling speed range of the vehicle 1 is low, it is not necessary to increase the groove area as a countermeasure against hydroplaning, and since it is necessary to improve the wear performance, the negative ratio of the tread 20 is preferably 5% or more and 25% or less. The negative ratio of the tread 20 is more preferably 7% to 20%, more preferably 9% to 15%.

In order to achieve both braking performance and wear performance on a wet road, it is preferable to form a sipe in the center block 23 divided by the circumferential main groove 21 and the circumferential main groove 22. The distance between the sipes in the tire circumferential direction is preferably 1.5 to 5.0 times the sipe depth, more preferably 2.0 to 4.0 times the sipe depth.

Further, in order to achieve both braking performance and wear performance on the wet road, the number of circumferential main grooves is preferably two to four. The groove width of the circumferential main groove is preferably 2 mm to 20 mm, preferably 3 mm to 15 mm.

(4) Function and effects

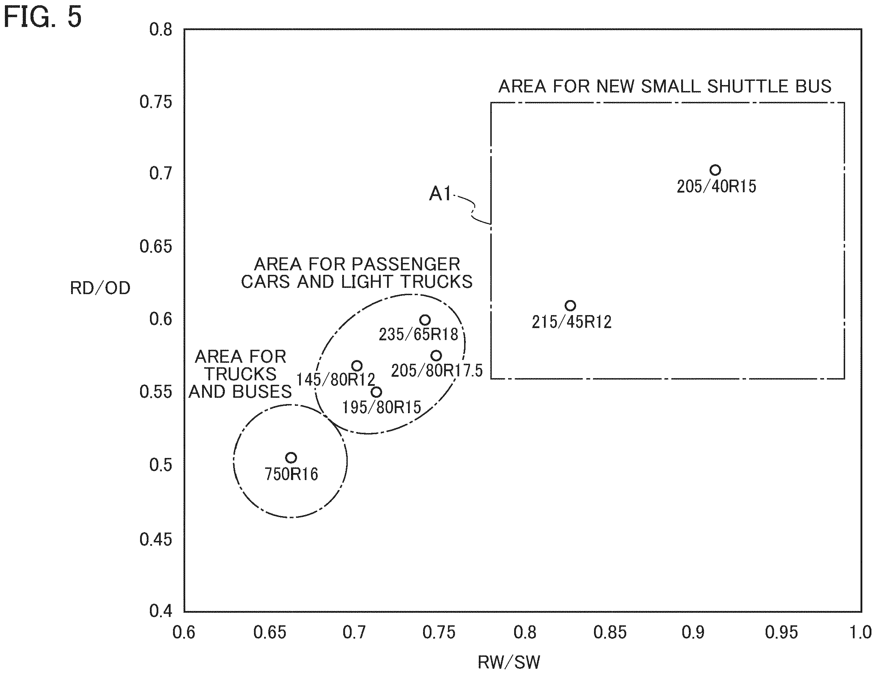

Next, the function and effects of the pneumatic tire 10 will be described. FIG. 5 shows a typical tire size positioning based on a combination of a tire shape (tire outer diameter OD and tire width SW) and a rim wheel shape (rim diameter RD and rim width RW).

Specifically, the horizontal axis of the graph shown in FIG. 5 shows the ratio (RW/SW) of the rim width RW to the tire width SW, and the vertical axis shows the ratio (RD/OD) of the rim diameter RD to the tire outer diameter OD. In FIG. 5, typical tire size positions are plotted according to the values of RW/SW and RD/OD.

As shown in FIG. 5, the area of the track bus tire is low in both RW/SW and RD/OD. The area of tire for passenger cars or light trucks is higher than that of tire for trucks and buses for both RW/SW and RD/OD.

An example of a suitable size for the pneumatic tire 10 described above, 215/45 R 12, is included in area A1. As described above, the area A1 corresponds to $0.78 \leqq RW/SW \leqq 0.99$, and $0.56 \leqq RD/OD \leqq 0.75$. Such an area A1 is positioned as an area of the tire for the new small shuttle bus with an emphasis on transportation of people, goods and the like in the city, as in the aforementioned vehicle 1.

The RD/OD in the area of the tire for the new small shuttle bus is not significantly different from, and some overlap with, the RD/OD in the area of the tire for the passenger cars or light trucks. On the other hand, the RW/SW in the area of the tire for the new small shuttle bus is higher than the RW/SW in the area of the tire for passenger cars or light trucks.

As described above, the outer diameter OD of the pneumatic tire 10 is 350 mm or more and 600 mm or less. Therefore, the diameter is sufficiently small in comparison with the size of the vehicle 1, and can contribute to space saving of the vehicle 1.

Further, according to the pneumatic tire 10 having the size included in the area A1, since the relationship of $0.78 \leqq RW/SW \leqq 0.99$ is satisfied, a wide rim width RW with respect to the tire width SW can be configured, that is, a wide tire can be configured, and it is easy to secure an air volume necessary for exhibiting high load capacity. If the rim width RW becomes too wide, the tire width SW also widens and space efficiency decreases, and the bead portion 60 tends to come off the rim wheel 100.

Further, according to the pneumatic tire 10 having the size included in the area A1, since the relationship of $0.56 \leqq RD/OD \leqq 0.75$ is satisfied, the rim diameter RD with respect to the tire outer diameter OD is large, and it is easy to secure a housing space for an in-wheel motor or the like. When the rim diameter RD becomes too small, the diameter size of the disc brake or the drum brake becomes small. Therefore, the contact area of the effective brake becomes small, and it becomes difficult to secure the required braking performance.

That is, according to the pneumatic tire 10, when it is mounted on the new small shuttle bus or the like, it is possible to achieve a high space efficiency while having a higher load-carrying capacity.

The rim diameter RD of the pneumatic tire 10 is 12 inches or more and 17.5 inches or less. Thus, a necessary and sufficient air volume and a housing space for an in-wheel motor can be secured while maintaining a small diameter. Also, braking performance and traction performance can be secured.

The tire width SW of the pneumatic tire 10 is preferably 125 mm or more and 255 mm or less. The aspect ratio of the pneumatic tire 10 is preferably 35% or more and 75% or less. Thus, a necessary and sufficient air volume and a housing space for an in-wheel motor can be secured.

Further, in this embodiment, as described above, the circumferential main groove 21 and the circumferential main groove 22 extending to the tire circumferential direction are formed, and the circumferential main groove 21 and the circumferential main groove 22 are formed closer to the tire equatorial line CL than the outer end 50 e in tire width direction of the belt layer 50.

That is, the circumferential main groove 21 and the circumferential main groove 22 are formed in a region where the ground pressure becomes particularly high in the pneumatic tire 10 having a small diameter and a wide width. Thus, the "escape area" of the rubber forming the tread 20 can be secured in the region where the ground contact pressure becomes high. Thus, uneven wear in the region can be effectively suppressed.

That is, according to the pneumatic tire 10, uneven wear can be effectively suppressed while attaining high load-carrying capacity and space saving.

In this embodiment, the circumferential main groove 21 and the circumferential main groove 22 are formed in a range of 25% or more and 95% or less, when the width from the tire equatorial line CL to the outer end 50 e in tire width direction of the belt layer 50 is 100%. Therefore, the circumferential main groove 21 and the circumferential main groove 22 are formed especially in the region where the ground pressure becomes high. Thus, uneven wear in the region can be more effectively suppressed.

(5)Other Embodiments

Although the contents of the present invention have been described above with reference to the examples, it will be obvious to those skilled in the art that the present invention is not limited to these descriptions and that various modifications and improvements are possible within the scope of the appended claims.

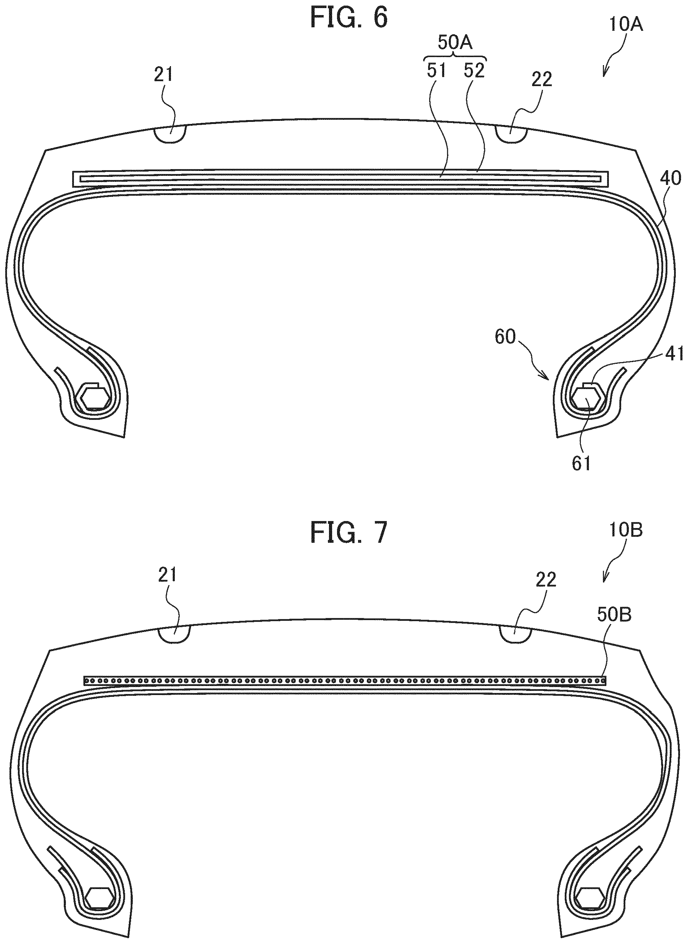

For example, the configuration of the pneumatic tire 10 may be changed as follows. FIG. 6 is a cross-sectional view of the pneumatic tire 10 A according to the modified example.

As shown in FIG. 6, pneumatic tire 10 A includes belt layer 50 A. The belt layer 50 A includes a core belt 51 and a sheath belt 52.

The core belt 51 is a belt in which cords (unillustrated) inclined at a low angle to the tire width direction is rubber-coated. The sheath belt 52 is a tape-shaped belt including cords and is wound over the entire circumference of the core belt 51. The belt layer 50 A offers the same functionality as the crossing belt layer.

A specific configuration of the sheath belt 52 is described, for example, in Japanese Unexamined Patent Application Publication No. 2016-215943.

The pneumatic tire 10 A is provided so that the folded end portion 41 of the carcass 40 folded at the bead portion 60 is wound along the bead core 61. The folded end portion 41 is in contact with outer end in the tire radial direction of the bead core 61. Although not shown in FIG. 6, a bead filler may be provided in the bead portion 60.

FIG. 7 is a sectional view of the pneumatic tire 10 B according to another modified example. As shown in FIG. 7, pneumatic tire 10 B includes a belt layer 50 B. The belt layer 50 B is a spiral belt formed by winding a resin coated cord coated with a resin material along the tire circumferential direction.

In the pneumatic tire 10 A and the pneumatic tire 10 B, a circumferential main groove 21 and a circumferential main groove 22 similar to the pneumatic tire 10 are formed.

Like the pneumatic tire 10 A and the pneumatic tire 10 B, the configuration of the belt layer and the shape of the folded end portion 41 of the carcass 40 may be appropriately changed in accordance with the characteristics of the vehicle 1.

[DELETED]

While embodiments of the invention have been described as above, it should not be understood that the statements and drawings relating to those embodiments are intended to limit the invention. Various alternative embodiments, examples and operating techniques will become apparent to those skilled in the art from this disclosure within the scope of the appended claims.

[Reference Signs List]

1 Vehicles
10 , 10 A , 10 B Pneumatic tire
20 Tread
21, 22 Circumferential main grooves
23 Center block
24, 25 Shoulder blocks
30 Tire side portion
40 Carcass
41 Folded end portion
50 , 50 A , 50 B Belt layer
50 e Outer end
51 Core belt
52 Sheath belt
60 Bead portion
61 Bead core
100 Rim wheel
110 Rim flange

**Claims**

1. A pneumatic tire (10) mounted on a vehicle (1) and a rim wheel (100) assembled to the pneumatic tire (10), comprising:

   a tread (20) in contact with a road surface; and
   a belt layer (50) provided inside the tire radial direction of the tread (20), wherein
   the outer diameter of the pneumatic tire (10) is 350 mm or more and 600 mm or less, wherein
   as RW is defined by a rim width of the rim wheel (100) assembled to the pneumatic tire (10) and SW is defined by a tire width of the pneumatic tire (10), the relation of $0.78 \leq RW/SW \leq 0.99$ is satisfied, wherein
   at least two circumferential main grooves (21, 22) extending to a tire circumferential direction are formed on the tread (20) , and
   the circumferential main grooves (21, 22) are formed closer to a tire equatorial line than an outer end in a tire width direction of the belt layer (50),
   wherein OD is defined by an outer diameter of the pneumatic tire (10) and RD is defined by a rim diameter of the pneumatic tire (10), the relation of $0.56 \leq RD/OD \leq 0.75$ is satisfied,
   the RD is 12 inches (305 mm) or more and 17.5 inches (445 mm) or less,
   **characterized in that**
   the tire has an air volume of 20,000 cm$^3$ or more and 80,000 cm$^3$ or less, and
   **in that** the set internal pressure of the pneumatic tire (10) is 400 to 1,100 kPa.

2. The pneumatic tire (10) according to claim 1, wherein when a width from the tire equatorial line to the outer end in the tire width direction of the belt layer (50) is 100%, the circumferential main grooves (21, 22) are formed in a range of 25% or more and 95% or less.

3. The pneumatic tire (10) according to claim 2, wherein the circumferential main grooves (21, 22) are formed in a range of 40% or more and 70% or less.

4. The pneumatic tire (10) according to claim 1, wherein a negative ratio of the tread (20) is 5% or more and 25% or less.

**Patentansprüche**

1. Luftreifen (10), der an einem Fahrzeug (1) angebracht ist, und ein Felgenrad (100), das an dem Luftreifen (10) montiert ist, umfassend:

eine Lauffläche (20) in Berührung mit einer Straßenoberfläche und

eine Gürtellage (50), die nach innen in der Reifenradialrichtung der Lauffläche (20) bereitgestellt wird, wobei der Außendurchmesser des Luftreifens (10) 350 mm oder mehr und 600 mm oder weniger beträgt, wobei, denn RW durch eine Felgenbreite des Felgenrades (100), das an dem Luftreifen (10) montiert ist, definiert wird und SW durch eine Reifenbreite des Luftreifens (10) definiert wird, die Beziehung von $0,78 \leq$ RW/SW $\leq 0,99$ erfüllt ist, wobei

mindestens zwei umlaufende Hauptrillen (21, 22), die sich zu einer Reifenumfangsrichtung erstrecken, auf der Lauffläche (20) geformt sind und

die umlaufenden Hauptrillen (21, 22) näher zu einer Reifenäquatorlinie geformt sind als ein in einer Reifenbreitenrichtung äußeres Ende der Gürtellage (50),

wobei OD durch einen Außendurchmesser des Luftreifens (10) definiert wird und RD durch einen Felgendurchmesser des Luftreifens (10) definiert wird, die Beziehung von $0,56 \leq$ RD/OD $\leq 0,75$ erfüllt ist,

der RD 12 Zoll (305 mm) oder mehr und 17,5 Zoll (445 mm) oder weniger beträgt,

**dadurch gekennzeichnet, dass**

der Reifen ein Luftvolumen von 20 000 cm$^3$ oder mehr und 80 000 cm$^3$ oder weniger aufweist, und dadurch, dass

der festgesetzte Innendruck des Luftreifens (10) 400 bis 1 100 kPa beträgt.

**2.** Luftreifen (10) nach Anspruch 1, wobei, wenn eine Breite von der Reifenäquatoriallinie zu dem in der Reifenbreitenrichtung äußeren Ende der Gürtellage (50) 100 % ist, die umlaufenden Hauptrillen (21, 22) in einem Bereich von 25 % oder mehr und 95 % oder weniger geformt sind.

**3.** Luftreifen (10) nach Anspruch 2, wobei die umlaufenden Hauptrillen (21, 22) in einem Bereich von 40 % oder mehr und 70 % oder weniger geformt sind.

**4.** Luftreifen (10) nach Anspruch 1, wobei ein negatives Verhältnis der Lauffläche (20) 5 % oder mehr und 25 % oder weniger beträgt.

**Revendications**

**1.** Bandage pneumatique (10) monté sur un véhicule (1) et une roue à jante (100) assemblée sur le bandage pneumatique (10), comprenant :

une bande de roulement (20) en contact avec une surface d'une route ; et
une couche de ceinture (50) fournie vers l'intérieur, dans la direction radiale du pneumatique, de la bande de roulement (20), dans lequel :
le diamètre extérieur du bandage pneumatique (10) correspond à 350 mm ou plus et à 600 mm ou moins ; dans lequel :
comme RW est définie par une largeur de jante de la roue à jante (100) assemblée sur le pneumatique (10), et SW est définie par une largeur de pneumatique du bandage pneumatique (10), la relation de $0,78 \leq$ RW/SW $\leq 0,99$ est satisfaite ; dans lequel :

au moins deux rainures circonférentielles principales (21, 22) s'étendant vers une direction circonférentielle du pneumatique sont formées sur la bande de roulement (20) ; et
les rainures circonférentielles principales (21, 22) sont formées plus près d'une ligne équatoriale du pneumatique qu'une extrémité externe, dans une direction de la largeur du pneumatique, de la couche de ceinture (50) ;
dans lequel OD est défini par un diamètre extérieur du bandage pneumatique (10) et RD est défini par un diamètre de jante du bandage pneumatique (10), la relation de $0,56 \leq$ RD/OD $\leq 0,75$ étant satisfaite ;
le RD correspond à 12 pouces (305 mm) ou plus et à 17,5 pouces (445 mm) ou moins ;
**caractérisé en ce que** :

le pneumatique a un volume d'air de 20 000 cm$^3$ ou plus et de 80 000 cm$^3$ ou moins ;
et **en ce que** :
la pression interne réglée du bandage pneumatique (10) est comprise entre 400 et 1 100 kPa.

**2.** Bandage pneumatique (10) selon la revendication 1, dans lequel, lorsqu'une largeur, de la ligne équatoriale du pneumatique vers l'extrémité externe, dans la direction de la largeur du pneumatique, de la couche de ceinture (50) représente 100 %, les rainures circonférentielles principales (21, 22) sont formées dans une plage de 25 % ou plus et de 95 % ou moins.

3. Bandage pneumatique (10) selon la revendication 2, dans lequel les rainures circonférentielles principales (21, 22) sont formées dans une plage de 40 % ou plus et de 70 % ou moins.

4. Bandage pneumatique (10) selon la revendication 1, dans lequel un rapport négatif de la bande de roulement (20) correspond à 5 % ou plus et à 25 % ou moins.

FIG. 1

# FIG. 2

FIG. 3

TIRE RADIAL DIRECTION

TIRE WIDTH DIRECTION

# FIG. 4

FIG. 5

EP 3 885 161 B1

## FIG. 6

## FIG. 7

**EP 3 885 161 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001050126 A1
- JP 2018138435 A
- JP 2016215943 A